# EUROPÄISCHE PATENTSCHRIFT

(11) **EP 0 830 996 B1**
(45) Veröffentlichungstag und Bekanntmachung des Hinweises auf die Patenterteilung: **02.04.2003**
(21) Anmeldenummer: 97114261.7
(22) Anmeldetag: 19.08.1997
(51) Int. Cl.: B60S 1/52, B05B 1/08

(54) **Befeuchtungsvorrichtung für eine Scheibe**
Humidifying device for a windscreen
Dispositif d'humidification pour pare-brise

(30) Priorität: 19.09.1996 DE 19638302
(43) Veröffentlichungstag der Anmeldung: 25.03.1998
(73) Patentinhaber: Volkswagen Aktiengesellschaft, 38436 Wolfsburg (DE)
(72) Erfinder: Sühring, Axel, 38448 Wolfsburg (DE)

(56) Entgegenhaltungen:
- DE-A- 2 534 288
- US-A- 4 365 752
- US-A- 4 721 251
- US-A- 4 896 383

## Beschreibung

Die Erfindung betrifft eine Befeuchtungsvorrichtung für eine Scheibe, insbesondere eines Kraftfahrzeuges, mit einer Reinigungsflüssigkeit, wobei die Reinigungsflüssigkeit über eine Spritzdüse auf die Scheibe spritzbar ist und die Spritzdüse eine Zuströmkammer, über die die Reinigungsflüssigkeit zuströmt, und eine Wechselwirkungskammer mit mindestens einer Öffnung, über die die Reinigungsflüssigkeit abströmt, aufweist.

Eine derartige Befeuchtungsvorrichtung ist z. B. aus der deutschen Patentanmeldung DE-A-25 34 288 bekannt. In der deutschen Patentschrift DE-C-25 60 546 ist das zugehörige Verfahren zur fächerförmigen Befeuchtung einer Scheibe beschrieben.

Nachteilig bei einer derartigen Vorrichtung ist jedoch, daß sehr enge Kanäle vorgesehen werden müssen, um das gewünschte Hin- und Herschwingen des Wasserstrahles zu erreichen. Ein Vergrößern der Kanäle bei dem gewünschten Volumenstrom ist auf Grund der gewünschten Strömungsmechanik nicht möglich, da sonst der Wasserstrahl nicht zu der gewollten Schwingbewegung angeregt wird.

Die engen Kanäle haben den Nachteil, daß im Winter bei tiefen Temperaturen die Reinigungsflüssigkeit in den Kanälen sehr leicht einfriert. Friert die Reinigungsflüssigkeit in den Kanälen ein, dann wird durch die fehlende Zuströmung seitens der Kanäle die Schwingbewegung des Wasserstrahles nicht mehr erzeugt.

Um das Einfrieren zu verhindern muß eine derartige Düse zusätzlich beheizt werden.

Weiterhin kann der Schwingende Wasserstrahl nicht in eine andere Richtung umgelenkt werden, da sonst ebenfalls der gewollte Strömungseffekt verloren geht.

Ein weiterer Nachteil besteht darin, daß der austretende Wasserstrahl fächerförmig über die Scheibe geführt wird, d. h. einen nur sehr unscharf begrenzten Bereich der Scheibe benetzt, und damit ein Großteil der Reinigungsflüssigkeit nicht zu einer gezielten Reinigung der Scheibe genutzt wird.

In der deutschen Patentschrift DE-A-37 24 765 ist ein kippbar gelagerter Düsenkörper beschrieben, wobei der Düsenkörper über eine Turbine angetrieben wird, und die Turbine wiederum von dem Wasserstrahl in Drehung versetzt wird.

Die Kippbewegung des Düsenkörpers wird hier über eine verhältnismäßig aufwendige und teure Mechanik erzeugt. Außerdem wird auch hier nur ein Auffächern des Wasserstrahles erreicht.

Ein wechselseitiges Abspritzen der Reinigungsflüssigkeit über zwei winklig beabstandete Wasserstrahlen ist nicht möglich.

Aufgabe der Erfindung ist es eine Befeuchtungsvorrichtung für eine Scheibe zu finden, mit der ein Strahl einer Reinigungsflüssigkeit wechselweise in unterschiedlichen Richtungen auf die Scheibe spritzbar ist. Die Schwingbewegung des Strahles soll durch eine einfache Mechanik durch die Strömung der Reinigungsflüssigkeit selbst hervorgerufen werden. Weiterhin soll die Befeuchtungsvorrichtung auch bei tiefen Temperaturen nicht durch Einfrieren ihre Funktionsfähigkeit verlieren.

Die Aufgabe der Erfindung wird durch die Merkmale des Anspruchs 1 gelöst. Vorteilhafte Aus- und Weiterbildungen sind in den Unteransprüchen gegeben.

Erfindungsgemäß wird in der Befeuchtungsvorrichtung eine Spritzdüse vorgeschlagen, wobei die Spritzdüse eine Zuströmkammer und eine Wechselwirkungskammer aufweist und in der Wechselwirkungskammer ein Pendelkörper angeordnet ist. Der Pendelkörper teilt die Wechselwirkungskammer in zwei Spritzkanäle und wird durch die Strömung der Reinigungsflüssigkeit zu einer Pendelbewegung angeregt.

Die Zuströmkammer und die Wechselwirkungskammer können selbstverständlich auch als eine einzige Kammer ausgebildet sein, in diesem Fall wäre der Bereich in dem die Reinigungsflüssigkeit zuströmt äquivalent mit der Zuströmkammer und der von dem Pendelkörper in zwei Kanäle unterteilte Bereich äquivalent mit der Wechselwirkungskammer.

Die Pendelbewegung wird dadurch erreicht, daß der Pendelkörper auf einer Achse drehbar gelagert ist, und auf die seitlichen Flächen des Pendelkörpers sich verändernde Druckkräfte wirken. Die auf den Pendelkörper von der Strömung ausgeübten Kräfte sind die Impulskräfte sowie, die sich aus den statischen Druckunterschieden in beiden Spritzkanälen resultierenden Kräfte auf den Pendelkörper.

Eine Weiterentwicklung der Erfindung besteht darin, daß der Pendelkörper durch die Achse in ein abströmseitiges Ende und ein zuströmseitiges Ende unterteilt wird, und daß das abströmseitige Ende länger als der zuströmseitige Ende ist.

Damit wird eine einfache Möglichkeit der Erzeugung der Pendelbewegung durch die Strömung der Reinigungsflüssigkeit gegeben. Der genaue Strömungsmechanismus ist nachfolgend anhand eines Ausführungsbeispieles näher erläutert.

Durch jeden der beiden Spritzkanäle strömt der gesamte Volumenstrom eines Spritzvorganges, so daß sich eine ausreichende Kanalweite ergibt, die sicherstellt, daß die Reinigungsflüssigkeit auch bei sehr tiefen Temperaturen nicht einfriert.

Eine scharfe Trennung der Spritzstrahlen kann durch zuströmseitiges und/oder abströmseitiges Verschließen der Spritzkanäle in Anschlagstellung des Pendelkörpers erreicht werden.

Eine weitere Verbesserung besteht darin, daß sich an die Spritzkanäle Abströmkanäle anschließen, die eine gemeinsame oder jeweils eine Winkelverstelleinrichtung z. B. die Abströmkanäle enthaltene Verstellkugeln, aufweisen. Damit kann die Richtung der Spritzstrahlen individuell eingestellt werden. Das Auftreffen der Spritzstrahlen kann so eingestellt werden, daß genau das Sichtfeld des Fahrers gereinigt wird. Auch wäre eine automatische Spritzhöhenverstellung in Abhängigkeit von der Fahrgeschwindigkeit oder eine manuelle Spritzhöhenverstellung von dem Fahrzeuginnenraum denkbar.

Durch die wechselweise in unterschiedlichen Winkeln abspritzenden und justierbaren Spritzstrahlen wird es ermöglicht, die Reinigung der Scheibe individuell an die Bedürfnisse des Fahrers anzupassen und damit den Anteil der Reinigungsflüssigkeit der nicht zur Reinigung der Scheibe beiträgt zu reduzieren. Zur Reinigung der Scheibe bei gleicher Reinigungsleistung wird damit weniger Reinigungsflüssigkeit benötigt, und das Volumen des Vorratsbehälters der Reinigungsflüssigkeit kann entsprechend verringert werden, ohne das bei gleicher Reinigungsleistung der Scheibe, die Nachfüllintervalle des Vorratsbehälters verkürzt werden müßten.

Die Düse ist einfach aufgebaut und kostengünstig herzustellen und auf Grund der Einfachheit des die Pendelbewegung auslösenden Strömungsmechanismuses sehr zuverlässig in ihrer Funktion.

Nachfolgend wird die Erfindung anhand eines Ausführungsbeispieles näher beschrieben. Es zeigen:
- Figur 1: Spritzdüse mit Pendelkörper;
- Figur 2: Spritzdüse mit Pendelkörper und abströmseitig verschlossenem Spritzkanal;
- Figur 3: Spritzdüse mit Pendelkörper und zwei Abströmkanälen;

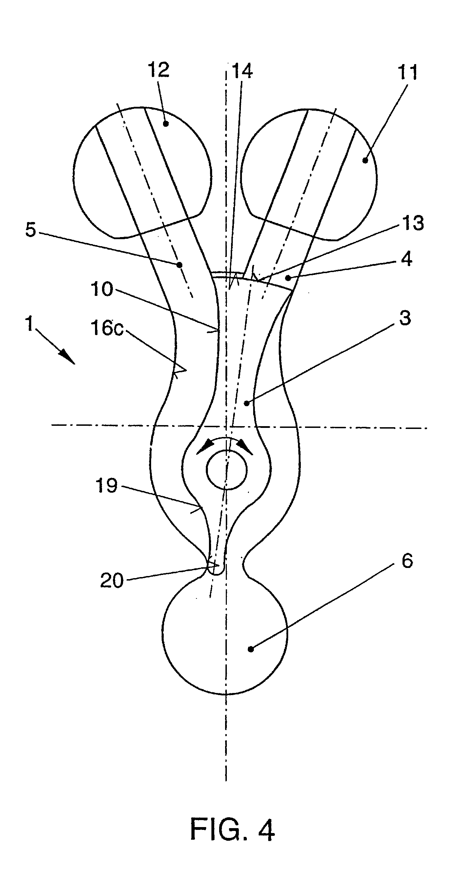

- Figur 4: Spritzdüse mit Pendelkörper, zwei Abströmkanälen, wovon einer durch den Pendelkörper verschlossen ist.

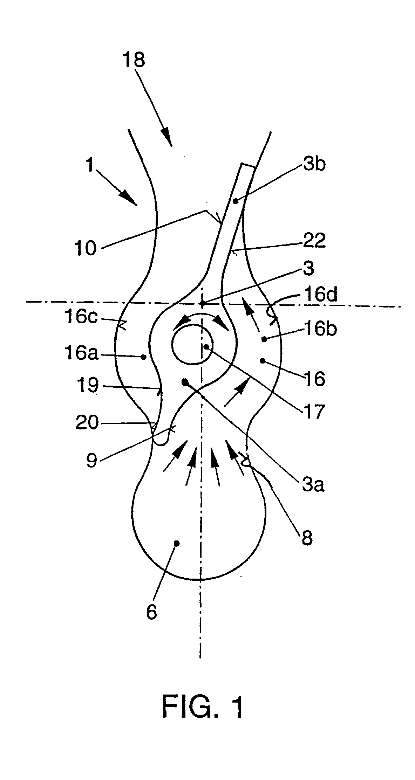

In Figur 1 ist eine Spritzdüse 1 mit einer Zuströmkammer 6 und einer Wechselwirkungskammer 16 und einem in der Wechselwirkungskammer 16 drehbar um die Achse 17 gelagerten Pendelkörper 3 zu erkennen. Die Zuströmkammer 6 wird durch eine Verengung 23 von der Wechselwirkungskammer 16 getrennt. Die Verengung 23 ist jedoch nicht zwingend erforderlich, die Wechselwirkungskammer kann auch übergangslos in die Zuströmkammer übergehen, d. h. beide Kammern bilden eine einzige Kammer. Der Pendelkörper 3 unterteilt die Wechselwirkungskammer 16 in die Spritzkanäle 16a und 16b. Die Reinigungsflüssigkeit strömt von der Zuströmkammer 6 in die Wechselwirkungskammer 16 und wird von dort über die Öffnung 18 auf eine nicht dargestellte Scheibe gespritzt.

Solche Spritzdüsen finden z. B. im Fahrzeugbau Verwendung, wobei die Spritzdüse auf oder unter der Motorhaube angeordnet ist. Die Reinigungsflüssigkeit wird durch eine Pendelbewegung des Pendelkörpers 3 wechselweise über die Spritzkanäle 16a und 16b auf die Scheibe gespritzt. Der der Pendelbewegung zugrundeliegende Strömungsmechanismus wird später näher erläutert. Durch die Pendelbewegung wird wechselweise die zuströmseitige und/oder abströmseitige Öffnung der Spritzkanäle 16a bzw. 16b verengt. Dadurch wird der Hauptstrom der Reinigungsflüssigkeit abwechselnd durch die Spritzkanäle 16a und 16b geführt. Die Abströmrichtung des Spritzstrahles ist durch die Geometrie der Spritzkanäle 16a und 16b vorgegeben.

Die Geometrie der Spritzkanäle 16a und 16b wiederum wird gebildet durch die Flächen 10; 19 und 16c bzw. 22; 9 und 16d. Um das wechselseitige Abströmen der Reinigungsflüssigkeit noch weiter zu verstärken, kann die Pendelbewegung so ausgebildet sein, daß der Pendelkörper 3 in seinen Anschlagstellungen durch Anliegen der Flächen 9 an der Fläche 8 bzw. durch Anliegen der Fläche 19 an der Fläche 20 die Zuströmöffnungen zu den Spritzkanälen 16a und 16b verschließt. Während die Zuströmung zu einem Spritzkanal (z. B. Spritzkanal 16a in Figur 1) verschlossen ist, wird die Reinigungsflüssigkeit nur über den geöffneten Spritzkanal (Spritzkanal 16b) in Figur 1 abgespritzt. Der Effekt des wechselseitigen Abspritzens kann noch weiter hervorgehoben werden, wenn der Pendelkörper 3 in den Anschlagstellungen das Abspritzen der Reinigungsflüssigkeit über den zuströmseitig geöffneten Spritzkanal 16a und 16b durch Anliegen der Flächen 22 und 21 bzw. 7 und 10 verhindert.

In diesem Fall wird jeweils über einen Spritzkanal 16a; 16b abgespritzt, während der jeweils andere Spritzkanal gefüllt wird.

Die Pendelbewegung wird folgendermaßen erzeugt.

Der Pendelkörper 3 befindet sich zu Beginn in einer beliebigen Stellung. Die Reinigungsflüssigkeit strömt von der Zuströmkammer 6 zu und bewegt durch die Impulskraft auf die Fläche 9 oder 19 den Pendelkörper in eine der beiden Anschlagstellungen, so daß die Flächen 19 und 20 oder 9 und 8 aneinander anliegen. In Figur 1 liegt die Fläche 19 an der Fläche 20 an. Durch die Strömung der Reinigungsflüssigkeit wirken unterschiedliche Kräfte auf das zuström- bzw. abströmseitige Ende des Pendelkörpers. Diese Kräfte können besonders einfach durch Beschleunigung oder Verzögerung der Reinigungsflüssigkeit erzeugt werden. So können die Spritzkanäle 16a und 16b an dem abströmseitigen Ende 3b des Pendelkörpers 3 sich erweitern, dadurch sinkt die Strömungsgeschwindigkeit und der statische Druck in der Strömung steigt. Auch bei gleichlangen Enden 3a; 3b des Pendelkörpers wirkt dadurch in dem durchströmten Kanal auf das abströmseitige Ende ein größerer Druck als auf das zuströmseitige Ende, und der Pendelkörper wird zu einer Drehbewegung entgegen dem Uhrzeigersinn angeregt, bis er mit der Fläche 9 an der Fläche 8 anliegt. Die Drehbewegung kann aber auch, bei in Anschlagstellung konstanter Spritzkanalweite, dadurch erreicht werden, in dem das abströmseitige Ende länger als das zuströmseitige Ende ausgebildet ist. Der statische Druck ist entlang eines Stromfadens wegen der konstanten Kanalweite bei konstanter Kanalhöhe ebenfalls konstant. Da die Fläche des abströmseitigen Endes größer als die Fläche des zuströmseitigen Endes ist, wirkt auf das abströmseitige Ende eine größere Kraft als auf das zuströmseitige Ende. Durch das Kräfteungleichgewicht wird dann die Drehbewegung ausgelöst.

Bei Beginn der Drehbewegung beginnt auch ein Teil der Reinigungsflüssigkeit in den Spritzkanal 16a zu strömen. Der Anteil der Reinigungsflüssigkeit der in den Spritzkanal 16a strömt, steigt mit zunehmenden Drehwinkel des Pendelkörpers 3, bis die Fläche 9 an der Fläche 8 anliegt, damit die Zuströmung zu dem Spritzkanal 16b verschlossen wird und die Reinigungsflüssigkeit ausschließlich über den Spritzkanal 16a auf die Scheibe gespritzt wird. Die Drehbewegung kann auch durch von der Reinigungsflüssigkeit auf den Pendelkörper ausgeübte Impulskräfte ausgelöst werden. Die auf den Pendelkörper wirkenden Impulskräfte können durch die Form des Pendelkörpers gezielt beeinflußt werden. Der Pendelkörper kann dafür z. B. stellenweise Verdickungen aufweisen, die der Strömung ein Widerstand entgegenbringen und die auf den Pendelkörper wirkenden Impulskräfte verursachen.

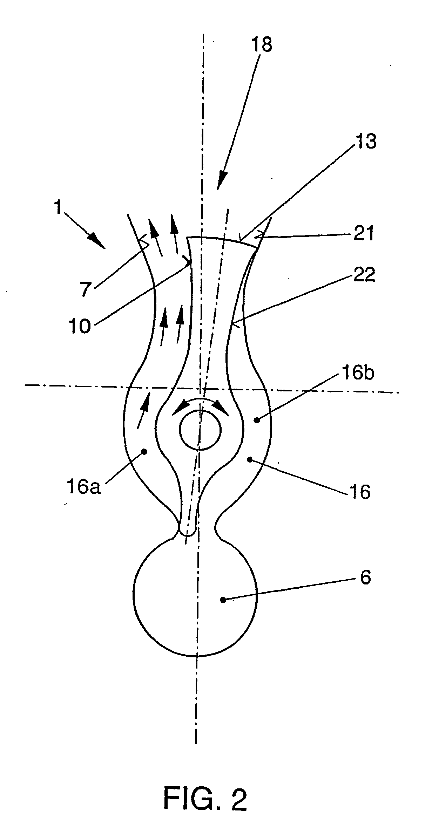

In Figur 2 liegt der Pendelkörper mit der Fläche 22 an der Fläche 21 an und verschließt dadurch abströmseitig den Spritzkanal 16b. Die Reinigungsflüssigkeit übt nun auf das abströmseitige Ende 3b eine Impulskraft aus, die den Pendelkörper in Drehbewegung versetzt.

Es ist theoretisch denkbar, daß der Pendelkörper in der Mittelstellung stehen bleibt, und die Reinigungsflüssigkeit über beide Spritzkanäle gleichzeitig auf die Scheibe gespritzt wird. In solchen Fällen werden jedoch die ständig in einem Fahrzeug auftretenden Erschütterungen den Pendelkörper aus dem Mittellager auslenken und die Schwingbewegung dadurch auslösen.

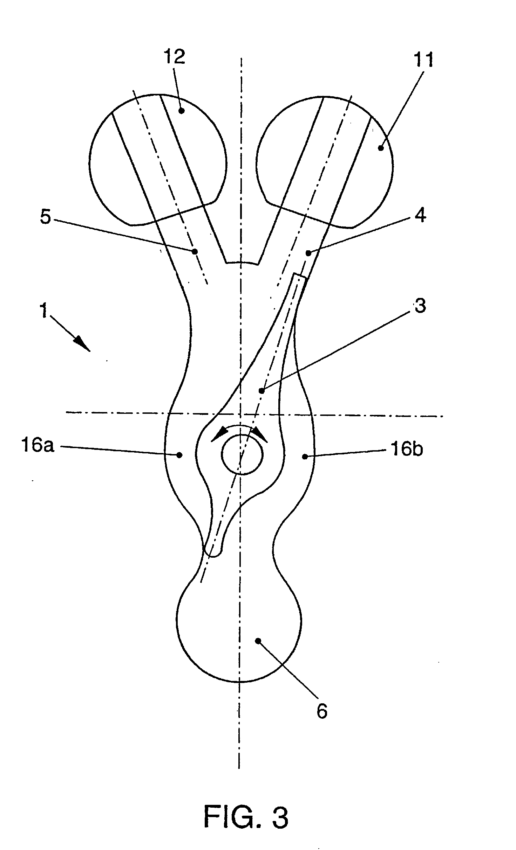

Eine gezielte Trennung der Spritzstrahlen aus den Spritzkanälen 16a, 16b kann dadurch erfolgen, daß sich an die Spritzkanäle 16a, 16b Abströmkanäle 4 und 5 anschließen, wie in Figur 3 zu erkennen ist. Die Abströmkanäle können zumindest teilweise in Verstellkugeln 11 und 12 verlaufen, wodurch eine einfache Verstellmöglichkeit des Auftreffwinkels auf die Scheibe gegeben ist.

Sinnvollerweise können die Flächen 10 und 22 so ausgebildet sein, daß in Anschlagstellung des Pendelkörpers der Spritzkanal 16a oder 16b gebildet durch die Flächen 10; 19 und 16c oder 22; 9 und 16d, über den die Reinigungsflüssigkeit gerade abgespritzt wird, kontinuierlich in den zugeordneten Abströmkanal 4 oder 5 übergeht. Das wechselweise Abströmen kann noch dadurch verstärkt werden, indem der Pendelkörper in Anschlagstellung jeweils einen der Abströmkanäle 4, 5 mit der Fläche 13 verschließt.

### BEZUGSZEICHENLISTE

- 1: Spritzdüse
- 3: Pendelkörper
- 3a: zuströmseitiges Ende
- 3b: abströmseitiges Ende
- 4; 5: Abströmkanal
- 6: Zuströmkammer
- 7; 21: Fläche
- 8; 20: Anlagefläche
- 9; 19: Fläche
- 10; 22: Fläche
- 11; 12: Verstellkugel
- 13: Fläche
- 14: Fläche
- 16: Wechselwirkungskammer
- 16a; 16b: Spritzkanäle
- 16c; 16d: Innenwand
- 17: Achse
- 18: Öffnung

## Patentansprüche

1. Befeuchtungsvorrichtung für eine Scheibe, insbesondere eines Kraftfahrzeuges, mit einer Spritzdüse, wobei eine Reinigungsflüssigkeit mit der Spritzdüse auf die Scheibe spritzbar ist und die Spritzdüse eine Zuströmkammer (6), über die die Reinigungsflüssigkeit zuströmt, und eine Wechselwirkungskam (16) mit mindestens einer Öffnung (18), über die die Reinigungsflüssigkeit abströmt, aufweist, **dadurch gekennzeichnet, daß** in der Wechselwirkungskammer (16) ein um eine Achse (17) drehbar gelagerter Pendelkörper (3) angeordnet ist, die Wechselwirkungskammer (16) durch den Pendelkörper (3) in zwei voneinander getrennte Spritzkanäle (16a; 16b) teilbar ist, und durch eine Pendelbewegung des Pendelkörpers (3) die Reinigungsflüssigkeit wechselweise über die beiden Spritzkanäle (16a; 16b) in unterschiedlichen Winkeln auf die Scheibe spritzbar ist.

2. Befeuchtungsvorrichtung nach Anspruch 1, **dadurch gekennzeichnet, daß** die Zuströmkammer (6) und die Wechselwirkungskammer (16) durch eine einzige Kammer gebildet sind.

3. Befeuchtungsvorrichtung nach Anspruch 1 oder 2 , **dadurch gekennzeichnet, daß** der Pendelkörper (3) durch den Mittelpunkt der Achse (17) in ein zur Öffnung (18) weisenden abströmseitiges Ende (3b) und in ein zur Zuströmkammer (6) weisendes zuströmseitiges Ende (3a) unterteilbar ist.

4. Befeuchtungsvorrichtung nach Anspruch 3, **dadurch gekennzeichnet, daß** das abströmseitige Ende (3b) länger als das zuströmseitige Ende (3a) ist.

5. Befeuchtungsvorrichtung nach Anspruch 3 oder 4, **dadurch gekennzeichnet, daß** das abströmseitige Ende (3b) seitliche Flächen (10; 22) und das zuströmseitige Ende (3a) seitliche Flächen (9; 19) aufweist, und das durch sich ändernde von der Reinigungsflüssigkeit auf die seitlichen Flächen (9; 10; 19; 22) ausübbare Kräfte der Pendelkörper (3) in eine Drehbewegung versetzbar ist.

6. Befeuchtungsvorrichtung nach Anspruch 5, **dadurch gekennzeichnet, daß** Anlageflächen (8; 20) vorgesehen sind, und daß durch zumindest punktweises Anliegen der seitlichen Anlageflächen (9; 19) des Pendelkörpers (3) an den Flächen (8; 20) die Zuströmung der Reinigungsflüssigkeit zu jeweils einem der Spritzkanäle (16a; 16b) unterbrechbar ist.

7. Befeuchtungsvorrichtung nach Anspruch 5 oder 6, **dadurch gekennzeichnet, daß** durch zumindest punktweises Anliegen der seitlichen Flächen (10; 22) des Pendelkörpers (3) an den Flächen (7; 21) jeweils einer der Spritzkanäle (16a; 16b) abströmseitig verschließbar ist.

8. Befeuchtungsvorrichtung nach einem der Ansprüche 1 bis 7, **dadurch gekennzeichnet, daß** der Pendelkörper (3) eine abströmseitige Fläche (13) aufweist und mindestens ein Teil der Öffnung (18) der Wechselwirkungskammer (16) mit der abströmseitigen Fläche (13) verschließbar ist.

9. Befeuchtungsvorrichtung nach einem der Ansprüche 1 bis 8, **dadurch gekennzeichnet, daß** abströmseitig an der Öffnung (18) der Wechselwirkungskammer (16) zwei voneinander getrennte und winklig beabstandete Abströmkanäle (4; 5) angeordnet sind, die Spritzkanäle (16a; 16b) strömungstechnisch mit den Abströmkanälen (4; 5) in Verbindung stehen oder verbindbar sind und über die Abströmkanäle (4; 5) die Reinigungsflüssigkeit in unterschiedlichen Winkeln auf die Scheibe spritzbar ist.

10. Befeuchtungsvorrichtung nach Anspruch 9, **dadurch gekennzeichnet, daß** der Spritzkanal (16a) bei Anliegen der Fläche (19) an der Fläche (20) begrenzt durch die Innenwandung (16c) und die seitlichen Flächen (10 und 19) mit dem Abströmkanal (5) einen im wesentlichen kontinuierlich ineinander übergehenden Strömungskanal bildet.

11. Befeuchtungsvorrichtung nach Anspruch 9, **dadurch gekennzeichnet, daß** der Spritzkanal (16b) bei Anliegen der Fläche (9) an der Fläche (8) begrenzt durch die Innenwandung (16d) und die Flächen (9 und 22) mit dem Abströmkanal 4 einen im wesentlichen kontinuierlich ineinander übergehenden Strömungskanal bildet.

12. Befeuchtungsvorrichtung nach einem der Ansprüche 9 bis 11, **dadurch gekennzeichnet, daß** der Pendelkörper (3) eine abströmseitige Fläche (13) aufweist und die den Abströmkanälen (4; 5) zugewandte Öffnung der Spritzkanäle (16a; 16b) mit der Fläche (13) verschließbar ist.

13. Befeuchtungsvorrichtung nach einem der Ansprüche 9 bis 12, **dadurch gekennzeichnet, daß** die Abströmkanäle (4; 5) ein oder mehrere Winkelverstelleinrichungen aufweisen.

14. Befeuchtungsvorrichtung nach Anspruch 13, **dadurch gekennzeichnet, daß** die Winkelverstelleinrichtung eine zumindest einen Teil eines Abströmkanals (4; 5) enthaltene Verstellkugel (11; 12) ist.

## Claims

1. Wetting device for a pane of glass, in particular of a motor vehicle, having a spray nozzle, it being possible for a cleaning liquid to be sprayed onto the pane of glass by means of the spray nozzle, and the spray nozzle having an inflow chamber (6), via which the cleaning liquid flows in, and an interaction chamber (16) with at least one opening (18), via which the cleaning liquid flows out, **characterized in that** a pendulum body (3), which is mounted so that it can rotate about a pin (17), is arranged in the interaction chamber (16), the interaction chamber (16) can be divided into two separate spray channels (16a; 16b) by the pendulum body (3), and the cleaning liquid can alternately be sprayed onto the pane of glass at different angles via the two spray channels (16a; 16b) as a result of a pendulum movement of the pendulum body (3).

2. Wetting device according to Claim 1, **characterized in that** the inflow chamber (6) and the interaction chamber (16) are formed by a single chamber.

3. Wetting device according to Claim 1 or 2, **characterized in that** the pendulum body (3) can be divided by the centre of the pin (17) into an outflow-side end (3b), which faces the opening (18), and an inflow-side end (3a), which faces the inflow chamber (6).

4. Wetting device according to Claim 3, **characterized in that** the outflow-side end (3b) is longer than the inflow-side end (3a).

5. Wetting device according to Claim 3 or 4, **characterized in that** the outflow-side end (3) has side faces (10; 22) and the inflow-side end (3a) has side faces (9; 19), and **in that** the pendulum body (3) can be made to execute a rotary movement by changing forces which can be exerted on the side faces (9; 10; 19; 22) by the cleaning liquid.

6. Wetting device according to Claim 5, **characterized in that** there are bearing surfaces (8; 20), and **in that** the incoming flow of cleaning liquid to in each case one of the spray channels (16a; 16b) can be interrupted as a result of at least punctiform bearing of the lateral bearing surfaces (9; 19) of the pendulum body (3) on the surfaces (8; 20).

7. Wetting device according to Claim 5 or 6, **characterized in that** in each case one of the spray channels (16a; 16b) can be closed off on the outflow side by at least punctiform bearing of the side faces (10; 22) of the pendulum body (3) on the surfaces (7; 21).

8. Wetting device according to one of Claims 1 to 7, **characterized in that** the pendulum body (3) has an outflow-side face (13), and at least part of the opening (18) of the interaction chamber (16) can be closed off by the outflow-side face (13).

9. Wetting device according to one of Claims 1 to 8, **characterized in that** two outflow channels (4; 5) which are separate from one another and are spaced apart angularly are arranged on the outflow side of the opening (18) of the interaction chamber (16), the spray channels (16a; 16b) are or can be flow-connected to the outflow channels (4; 5), and the cleaning liquid can be sprayed onto the pane of glass at different angles via the outflow channels (4; 5).

10. Wetting device according to Claim 9, **characterized in that** the spray channel (16a), when the face (19) bears against the face (20), delimited by the inner wall (16c) and the side faces (10 and 19), forms a flow channel with the outflow channel (5) such that they substantially merge continuously into one another.

11. Wetting device according to Claim 9, **characterized in that** the spray channel (16b), when the face (9) bears against the face (8), delimited by the inner wall (16d) and the faces (9 and 22), forms a flow channel with the outflow channel 4 such that they substantially merge continuously into one another.

12. Wetting device according to one of Claims 9 to 11, **characterized in that** the pendulum body (3) has an outflow-side face (13), and that opening of the spray channels (16a; 16b) which faces the outflow channels (4; 5) can be closed off by the face (13).

13. Wetting device according to one of Claims 9 to 12, **characterized in that** the outflow channels (4; 5) have one or more angle-adjustment means.

14. Wetting device according to Claim 13, **characterized in that** the angle-adjustment means is an adjustment ball (11; 12) which includes at least a part of an outflow channel (4; 5).

## Revendications

1. Dispositif d'humidification pour un pare-brise, en particulier d'un véhicule automobile, avec une buse de projection, dans lequel un liquide de nettoyage peut être projeté sur le pare-brise avec la buse de projection et la buse de projection présente une chambre d'arrivée (6) par laquelle le liquide de nettoyage arrive et une chambre d'alternance (16) avec au moins une ouverture (18) par laquelle le liquide de nettoyage s'échappe, **caractérisé en ce qu'**un corps oscillant (3) pouvant pivoter autour d'un axe (17) est disposé dans la chambre d'alternance (16), la chambre d'alternance (16) peut être divisée par le corps oscillant (3) en deux canaux de projection séparés l'un de l'autre (16a; 16b), et le liquide de nettoyage peut être projeté sous différents angles sur le pare-brise alternativement par les deux canaux de projection (16a; 16b) par un mouvement d'oscillation du corps oscillant (3).

2. Dispositif d'humidification suivant la revendication 1, **caractérisé en ce que** la chambre d'arrivée (6) et la chambre d'alternance (16) sont formées par une seule chambre.

3. Dispositif d'humidification suivant la revendication 1 ou 2, **caractérisé en ce que** le corps oscillant (3) peut être divisé par le point central de l'axe (17) en une extrémité (3b) du côté de l'échappement orientée vers l'ouverture (18) et une extrémité (3a) du côté de l'arrivée orientée vers la chambre d'arrivée (6).

4. Dispositif d'humidification suivant la revendication 3, **caractérisé en ce que** l'extrémité (3b) du côté de l'échappement est plus longue que l'extrémité (3a) du côté de l'arrivée.

5. Dispositif d'humidification suivant la revendication 3 ou 4, **caractérisé en ce que** l'extrémité (3b) du côté de l'échappement présente des faces latérales (10; 22) et l'extrémité (3a) du côté de l'arrivée présente des faces latérales (9; 19), et **en ce que** le corps oscillant (3) est mis en mouvement de rotation par des forces changeantes qui peuvent être exercées par le liquide de nettoyage sur les faces latérales (9; 10; 19; 22).

6. Dispositif d'humidification suivant la revendication 5, **caractérisé en ce qu'**il est prévu des faces d'appui (8; 20) et **en ce que** l'arrivée du liquide de nettoyage vers chacun des canaux de projection (16a; 16b) peut être interrompue par l'appui au moins ponctuel des faces d'appui latérales (9; 19) du corps oscillant (3) sur les faces (8; 20).

7. Dispositif d'humidification suivant la revendication 5 ou 6, **caractérisé en ce que** chacun des canaux de projection (16a; 16b) peut être fermé du côté de l'échappement par l'appui au moins ponctuel des faces latérales (10; 22) du corps oscillant (3) sur les faces (7; 21).

8. Dispositif d'humidification suivant l'une quelconque des revendications 1 à 7, **caractérisé en ce que** le corps oscillant (3) présente une face (13) du côté de l'échappement et au moins une partie de l'ouverture (18) de la chambre d'alternance (16) peut être fermée avec la face (13) du côté de l'échappement.

9. Dispositif d'humidification suivant l'une quelconque des revendications 1 à 8, **caractérisé en ce que** deux canaux d'échappement (4; 5) séparés l'un de l'autre et angulairement distants l'un de l'autre sont disposés du côté de l'échappement à l'ouverture (18) de la chambre d'alternance (16), les canaux de projection (16a; 16b) sont ou peuvent être en communication d'écoulement avec les canaux d'échappement (4; 5) et le liquide de nettoyage peut être projeté sur le pare-brise sous différents angles par les canaux d'échappement (4; 5).

10. Dispositif d'humidification suivant la revendication 9, **caractérisé en ce que**, avec la face (19) appliquée sur la face (20), le canal de projection (16a) forme, limité par la paroi intérieure (16c) et les faces latérales (10 et 19), avec le canal d'échappement (5) un canal d'écoulement passant de l'un à l'autre de façon sensiblement continue.

11. Dispositif d'humidification suivant la revendication 9, **caractérisé en ce que**, avec la face (9) appliquée sur la face (8), le canal de projection (16b) forme, limité par la paroi intérieure (16d) et les faces (9 et 22), avec le canal d'échappement (4) un canal d'écoulement passant de l'un à l'autre de façon sensiblement continue.

12. Dispositif d'humidification suivant l'une quelconque des revendications 9 à 11, **caractérisé en ce que** le corps oscillant (3) présente une face (13) du côté de l'échappement et l'ouverture des canaux de projection (16a; 16b) tournée vers les canaux d'échappement (4; 5) peut être fermée avec la face (13).

13. Dispositif d'humidification suivant l'une quelconque des revendications 9 à 12, **caractérisé en ce que** les canaux d'échappement (4; 5) présentent un ou plusieurs dispositifs de réglage d'angle.

14. Dispositif d'humidification suivant la revendication 13, **caractérisé en ce que** le dispositif de réglage d'angle est une boule de réglage (11; 12) occupant au moins une partie d'un canal d'échappement (4; 5).
